# EUROPÄISCHE PATENTANMELDUNG

(11) **EP 0 766 437 A1**
(43) Veröffentlichungstag der Anmeldung: **02.04.1997**
(21) Anmeldenummer: 96114912.7
(22) Anmeldetag: 17.09.1996
(51) Int. Cl.: H04M 1/72

(54) **Fernmeldegerät**

(30) Priorität: 29.09.1995 DE 19536476
(71) Anmelder: SIEMENS AKTIENGESELLSCHAFT, 80333 München (DE)
(72) Erfinder: Hofmann, Jürgen, 85304 Ilmmünster (DE)

(57) **Zusammenfassung**

Die Erfindung betrifft ein Fernmeldegerät. Dieses weist eine Einrichtung zum Senden und zum Empfang von Infrarot-Signalisierungsdatensignalen zu und von einer peripheren Einrichtung auf. Zusätzlich zu den Infrarot-Signalisierungsdatensignalen sendet und empfängt die Einrichtung auch Infrarot-Nutzdatensignale.

Weiterhin weist das Fernmeldegerät eine Einrichtung zur Bestimmung der aktuellen Helligkeit auf, welche helligkeitsbezeichnende Signale erzeugt, und/oder eine Einrichtung zur Bestimmung des Abstandes der Einrichtung zu einem Gegenstand, die abstandsbezeichnende Signale erzeugt.

## Beschreibung

Die Erfindung betrifft ein Fernmeldegerät nach dem Oberbegriff des Anspruchs 1.

Es sind bereits Fernmeldegeräte, insbesondere tragbare Fernsprechgeräte, bekannt, welche eine Kommunikation mit einer peripheren Einrichtung (Zubehörgeräte) ermöglichen.

Dabei sind das jeweilige Fernmeldegerät und das periphere Gerät durch eine mechanische Schnittstelle miteinander verbunden.

Ausgehend von diesem Stand der Technik liegt der Erfindung die Aufgabe zugrunde, ein Fernmeldegerät der eingangs genannten Art anzugeben, das erweiterte Funktionen ermöglicht.

Diese Aufgabe wird erfindungsgemäß durch ein Fernmeldegerät gelöst, das in den Ansprüchen definiert ist.

Die Erfindung ist mit einer Mehrzahl von Vorteilen verbunden. Das erfindungsgemäße Fernmeldegerät weist eine Infrarot-Schnittstelle für eine Kommunikation mit einem peripheren Gerät auf, wobei sowohl Signalisierungsdatensignale als auch Nutzdatensignale zwischen Fernmeldegerät und peripherer Einrichtung übertragbar sind.

Ein erfindungsgemäßes Fernmeldegerät ist dadurch gekennzeichnet, daß es eine Einrichtung zur Bestimmung der aktuellen Helligkeit aufweist, wobei diese Einrichtung helligkeitsbezeichnende Signale erzeugt.

Diese Signale werden erfindungsgemäß in unterschiedlicher Weise genutzt. Beispielsweise wird mit diesen Signalen die Helligkeit einer optischen Anzeigeeinrichtung des Fernmeldegerätes gesteuert. In einer weiteren Ausführungsform des erfindungsgemäßen Fernmeldegerätes ist es vorgesehen, daß die helligkeitsbezeichnenden Signale die Generierung von Befehlen durch Tasten freigeben oder sperren. Weiterhin ist vorgesehen, daß die helligkeitsbezeichnenden Signale ein Signal, das einen kommenden Ruf signalisiert, modifiziert, so daß beispielsweise anstelle eines akustischen und/oder optischen Signals eine mechanische Schwingung des Fernmeldegeräts generiert wird.

Eine weitere erfindungsgemäße Ausführungsform des Fernmeldegerätes ist dadurch gekennzeichnet, daß es eine Einrichtung zur Bestimmung des Abstandes der Einrichtung zu einem Gegenstand aufweist, wobei diese Einrichtung abstandsbezeichnende Signale erzeugt. Mit diesen Signalen läßt sich ein Wahlstart oder eine Gesprächsannahme auslösen.

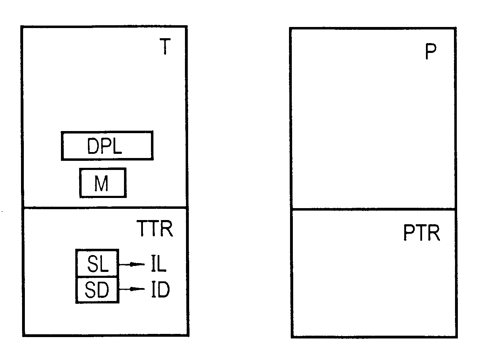

Die Erfindung wird nun anhand der Zeichnung beschrieben.

Ein Fernmeldegerät T, beispielsweise ein drahtgebundenes oder ein mobiles Fernsprechendgerät, das in der Figur schematisch dargestellt ist, weist eine Einrichtung TTR zum Senden und zum Empfang von Infrarot-Signalisierungsdatensignalen und/oder Infrarot-Nutzdatensignalen auf. Die Einrichtung TTR hat damit eine doppelte Funktion, nämlich die Übertragung sowohl von Signalisierungsdatensignalen als auch von Nutzdatensignalen. Das erfindungsgemäße Gerät ist damit in der Lage, Signalisierungsdatensignale und Nutzdatensignale zu einer peripheren Einrichtung P zu übertragen. Beispiele für derartige periphere Einrichtungen sind z.B. eine Freisprechanlage zwischen Fernmeldeendgerät, Mikrophon und Lautsprecher, ein Personal Computer, ein Fernsprech-Handapparat, ein Anrufbeantworter sowie eine Datenverarbeitungseinrichtung, insbesondere ein sogenannter Laptop.

Damit wird erfindungsgemäß ermöglicht, Sprache in die periphere Einrichtung P (Mikrophon einer Freisprechanlage) einzugeben und die Sprachsignale mittels Infrarot-Signalen zu dem zugehörigen Fernmeldeendgerät zu übertragen. In entsprechender Weise werden Sprachsignale mittels Infrarot-Signalen zwischen Fernmeldeendgerät und Lautsprecher übertragen.

Auf diese Weise können auch Fernsprechnachrichten in einem Anrufbeantworter abgespeichert werden, der räumlich von dem Fernsprechendgerät entfernt ist. Erfindungsgemäß werden also Nutzdatensignale (z.B. Sprach- oder Faxnachrichtensignale) und Signalisierungsdaten, z.B. zur Betätigung eines Anrufbeantworters (u.a. Ein- und Abschalten, Abgfrageprozeduren) zwischen einem Fernmeldegerät T und einer peripheren Einrichtung P in Form von Infrarot-Signalen übertragen.

Eine Ausführungsform des erfindungsgemäßen Fernmeldeendgerätes weist eine Einrichtung SL zur Bestimmung der aktuellen Helligkeit auf (Helligkeit, die das Fernmeldegerät jeweils umgibt). Diese Einrichtung SL erzeugt helligkeitsbezeichnende Signale IL. Eine optische Anzeigeeinrichtung DPL (z.B. Display, Leuchtdiode, etc.) des Fernmeldegerätes wird durch diese helligkeitsbezeichnende Signale IL gesteuert. Damit läßt sich die Helligkeit der optischen Anzeigeeinrichtung der jeweiligen Umgebungshelligkeit anpassen.

Die helligkeitbezeichnenden Signale IL können auch eine sogenannte Tastatursperre aktivieren: die Signale IL geben die Generierung von Befehlen durch Tasten frei oder sperren die Befehlsgenerierung. Ein Signal IL, das den Zustand "keine Helligkeit" bezeichnet, sperrt die Generierung von Befehlen. Dieses Signal IL verhindert also, daß bei Tastenbetätigung in diesem Zustand "Keine Helligkeit" Befehle generiert werden, die sonst, d.h. im Zustand "Helligkeit größer Null" bei Tastenbetätigung generiert werden würden. Damit wird z.B. ausgeschlossen, daß eine unbeabsichtigte Tastenbetätigung bei Lagerung eines Mobilfunk-Handapparats in einer Jackentasche durch andere in derselben Jackentasche befindliche Gegenstände (Schlüssel, Münzen, Schreibutensilien) zur Generierung von Befehlen (z.B. Belegen einer Verbindung) führt.

Die helligkeitsbezeichnenden Signale IL können auch dazu verwendet werden, Signale, die einen kommenden Anruf signalisieren, zu modifizieren. So ist es möglich, daß die Signale IL in dem Gerät, das zum Zeitpunkt eines kommenden Rufs beispielsweise in einer Jackentasche gelagert ist, eine im Gerät vorgesehene Einrichtung M aktivieren, die das Gerät in für eine Bedienperson erkennbare mechanische Schwingungen versetzt, wobei sonst vorgesehene optische und/oder akustische Signale, die den kommenden Ruf signalisieren, nicht generiert werden.

Eine weitere erfindungsgemäße Ausführungsform des Fernmeldegerätes weist eine Einrichtung SD zur Bestimmung des Abstandes der Einrichtung SD zu einem Gegenstand auf, wobei die Einrichtung SD abstandsbezeichnende Signale ID erzeugt. Die Einrichtung SD erkennt damit beispielsweise, daß ein mobiles Fernsprechendgerät in die Hand genommen oder an das Ohr gehalten wird. Die abstandsbezeichnenden Signale ID lösen erfindungsgemäß einen Wahlstart oder eine Gesprächsannahme aus.

## Patentansprüche

1. Fernmeldegerät (T),
**dadurch gekennzeichnet,**
daß es eine Einrichtung (TTR) zum Senden und zum Empfang von Infrarot-Signalisierungsdatensignalen zu und von einer peripheren Einrichtung (P) aufweist; und daß die Einrichtung (TTR) zusätzlich zu den Infrarot-Signalisierungsdatensignalen auch Infrarot-Nutzdatensignale sendet und empfängt.

2. Fernmeldegerät (T),
**dadurch gekennzeichnet,**
daß das Fernmeldegerät eine Einrichtung (SL) zur Bestimmung der aktuellen Helligkeit aufweist, die helligkeitsbezeichnende Signale (IL) erzeugt.

3. Fernmeldegerät nach Anspruch 2,
**dadurch gekennzeichnet,**
daß das Fernmeldegerät (T) eine optische Anzeigeeinrichtung (DPL) aufweist, deren Anzeigehelligkeit steuerbar ist, und daß die helligkeitsbezeichnenden Signale (IL) die optische Anzeigeeinrichtung (DPL) steuern.

4. Fernmeldegerät nach Anspruch 2 oder 3,
**dadurch gekennzeichnet,**
daß die helligkeitsbezeichnenden Signale (IL) die Generierung von Befehlen durch Tasten freigeben oder sperren.

5. Fernmeldegerät nach einem der Ansprüche 2 bis 4,
**dadurch gekennzeichnet,**
daß die helligkeitsbezeichnenden Signale (IL) Signale modifizieren, die einen kommenden Ruf signalisieren.

6. Fernmeldegerät nach Anspruch 5,
**dadurch gekennzeichnet,**
daß die helligkeitsbezeichnenden Signale (IL) eine im Gerät (T) angeordnete Einrichtung (M) aktivieren, die das Gerät (T) in mechanische Schwingungen versetzt.

7. Fernmeldegerät (T),
**dadurch gekennzeichnet,**
daß das Fernmeldegerät eine Einrichtung (SD) zur Bestimmung des Abstandes der Einrichtung (SD) zu einem Gegenstand aufweist, die abstandsbezeichnende Signale (ID) erzeugt.

8. Fernmeldegerät nach Anspruch 7,
**dadurch gekennzeichnet,**
daß die abstandsbezeichnenden Signale (ID) einen Wahlstart oder eine Gesprächsannahme auslösen.

9. Fernmeldegerät nach einem der Ansprüche 1 bis 3 oder 7,
**dadurch gekennzeichnet,**
daß das Fernmeldegerät tragbar ist.

10. Fernmeldegerät nach den Ansprüchen 1 und 2.

11. Fernmeldegerät nach den Ansprüchen 9 und 10.
